# EUROPEAN PATENT SPECIFICATION

(11) **EP 2 744 707 B1**
(45) Date of publication and mention of the grant of the patent: **28.09.2016**
(21) Application number: 11871042.5
(22) Date of filing: 16.08.2011
(51) Int. Cl.: B64D 37/10, B64D 37/24, B64D 37/32

(54) **SPLIT RANGE CONTROL FOR PRESSURISATION**
FOLGEREGELUNG FÜR DRUCKBEAUFSCHLAGUNG
RÉGULATION À PLAGE FRACTIONNÉE POUR MISE SOUS PRESSION

(43) Date of publication of application: 25.06.2014
(73) Proprietor: Saab AB, 581 88 Linköping (SE)
(72) Inventor: LIND, Ingela, S-583 37 Linköping (SE)
(74) Representative: Zacco Sweden AB
(86) International application number: PCT/SE2011/050994
(87) International publication number: WO 2013/025133

(56) References cited:
- GB-A- 836 639
- GB-A- 1 264 841
- US-A- 3 693 915
- US-A- 5 880 356
- US-A1- 2008 053 541
- Hampus Gavel: "On Aircraft Fuel Systems Conceptual Design and Modeling", , 31 December 2007 (2007-12-31), XP055175379, Linköping, Sweden ISBN: 978-9-18-564304-2 Retrieved from the Internet: URL:http://www.diva-portal.org/smash/get/d iva2:17594/FULLTEXT01.pdf [retrieved on 2015-03-10]

## Description

### TECHNICAL FIELD

The present invention relates to a method and a system for pressurising volumes that need to have a relative air pressure, in comparison with an ambient pressure, where the ambient air pressure can change rapidly and with large amplitude and where the access to pressurised air is limited.

### BACKGROUND ART

It is preferable on aircrafts to have as large fuel tanks as possible in order to maximize the possible distance to be covered. However, larger tanks bring about other inconveniencies.

In especially fighter aircrafts the ambient pressure can change rapidly due to e.g. a sudden dive. The rapid change between the pressure inside the tank and the pressure outside the tank can result in tank structural damage, which might permanently destroy the aircraft. It is therefore important that the pressure inside the tank can be adapted rapidly to the ambient pressure.

It is also desirable to keep a light overpressure inside the tank relative to the ambient pressure because if the pressure inside the tank is too low the fuel will evaporate. If the tank is large and the amount of fuel in the tank is low, a considerable air flow will be needed in order to control the pressure in the tank. The amount of pressurised air, which can be used for tank pressurisation, in an aircraft is normally limited, because pressurised air is also used for e.g. cooling.

There are two principally different solutions to regulate the pressure inside the fuel tank of an aircraft, an open regulating system and a closed regulating system. The closed systems have an active regulation on both the air inflow and on the air outflow by means of regulators and pressure steered valves. The open regulating systems have only regulation on the air inlet while the air outflow passes through a non variable throttling. The closed regulating systems need complicated devices in order to function properly. It increases the overall weight of the aircraft and it requires a great deal of redundancy in order to obtain a safe system. The open regulating systems are simpler. However, since the tank constantly leaks air, independently of the air pressure within the tank, the demand for pressurised air into the tank will be considerable and may also lead to an increase in overall weight of the aircraft.

If the regulated inflow passes through the same throttling as used for the non-regulated outflow, the solution is referred to as a half-open regulating system. Half-open regulating systems are a compromise that uses the inflow to block the outflow. The size of the throttling is static and normally dimensioned by the flow that is needed to keep the pressure within an admissible interval. With a large opening air can quickly be pumped into the tank or leave the tank which makes it possible to rapidly change the pressure inside the tank. This is especially necessary when the aircraft performs a diving manoeuvre which results in a sudden increase of the ambient pressure and air has to be pumped very rapidly into the tank.

In a static situation, however, when the ambient pressure is almost constant and there is no need to change the pressure inside the tank, a small opening, which requires a smaller inflow to block the outflow, is preferable.

A half-open regulating system for pressurising a volume, as described above, is disclosed in the dissertation "On Aircraft Fuel Systems - Conceptual Design and Modeling" (H. Gavel, Linköpings universitet, Linköping 2007).

### DEFINITIONS

It shall be noted that through this application the expression "upstream" refers to devises arranged closer to the source of pressurised air and the expression "downstream" refers to devises arranged closer to the volume. Through this application the expressions "upper" and "lower" refer uniquely to the position in the figures and has nothing to do with the airflow.

### SUMMARY OF THE INVENTION

The object of the present invention is to overcome the above mentioned weaknesses of the known technology.

A further object of the present invention is to create a method and a system for pressurising large volumes that need to have a relative air pressure, in comparison with an ambient pressure, within a specified interval where the ambient air pressure can change rapidly and with large amplitude and where the access to pressurised air is limited.

Another object of the present invention is to create a system that is reliable and easy to maintain.

Still a further object of the present invention is to create a system that has a low weight.

These objects are achieved with a system for pressurising a volume according to the characterizing parts of claim 1. The invention defines a system for pressurising a volume that need to have a relative air pressure, in comparison with an ambient pressure, within a specified interval, comprising a source of pressurised air, a conduit system for delivering pressurized air from the source into the volume, a first sensor which is arranged to measure the pressure inside the volume, a second sensor which is arranged to measure the ambient pressure, a first regulator arranged on a first part of the conduit system, which regulator is arranged to regulate a first airflow, from the source of pressurised air to the volume through the first part of the conduit system, in order to obtain a first relative pressure difference value between the pressure inside the volume and the ambient pressure. The system also comprises a first ejector arranged on the first part of the conduit system, downstream of the first regulator, a second regulator which is arranged in parallel to the first regulator and the first ejector on a second part of the conduit system and which is arranged to regulate a second flow, from the source of pressurised air to the volume through the second part of the conduit system, in order to obtain a second relative pressure difference value between the pressure inside the volume and the ambient pressure, a second ejector arranged on the second part of the conduit system, downstream of the second regulator and an upper check valve arranged on the second part of the conduit system downstream of the second ejector, blocking airflow from the volume into the second ejector.

The present invention further defines a method for pressurising a volume that needs to have a relative air pressure, in comparison with an ambient pressure, within a specified interval comprising the steps of:
- measuring the pressure within the volume,
- measuring the ambient pressure outside of the volume,
if the pressure difference between the pressure inside the volume and the pressure outside of the volume exceeds a first relative pressure difference value
- relieving the air pressure within the volume by letting air flow out from the volume through a first ejector,
if the pressure difference between the pressure inside the volume and the pressure outside of the volume is below the first relative pressure difference value
- using a first regulator arranged upstream of the first ejector to regulate a first airflow from a source of pressurised air through the first regulator into the volume in order to obtain the first relative pressure difference value between the pressure inside the volume and the ambient pressure,
- using the airflow through the first ejector to suck in additional ambient air through the first ejector and add it to the first airflow into the volume,
if the pressure difference between the pressure inside the volume and the pressure outside of the volume is below a second relative pressure difference value, which is lower than the first relative pressure difference value
- using a second regulator arranged in parallel to the first regulator and the first ejector to regulate a second airflow through the second regulator into the volume in order to obtain the second relative pressure difference value between the pressure inside the volume and the ambient pressure,
- using the airflow through a second ejector, which is arranged downstream of the second regulator, to suck in additional ambient air through the second ejector and add it to the second airflow into the volume.

The present invention has the effect that it is possible to increase the volume without having to increase the amount of pressurised air during a static condition and only having to increase the amount of pressurised air moderately during a transient condition. The system is relatively simple, which minimizes the failure rate and the maintenance burden. It also has a relatively low weight.

The present invention further defines a lower check valve arranged on a third part of the conduit system, which is arranged downstream of the two regulators and connects the first part of the conduit system with the second part for the conduit system. The effect of this check valve is that a flow connection can be established between the second regulator and the first ejector. This means that the system still works, although not perfectly, if one of the regulators fail.

The present invention further defines a security valve, which relieves air when, for some reason, the pressure inside the volume is much higher than the ambient pressure and reaches dangerous levels. The effect of this security valve is that the probability of a tank explosion is minimized.

### BRIEF DESCRIPTION OF THE DRAWINGS

Further advantages and features of the present invention can be derived from the following detailed description of exemplary embodiments of the invention, with reference to the drawings.
Figure 1 shows a principal scheme of a pressurising system according to the prior art when the pressure inside the tank is too low.
Figure 2 shows the principle of an ejector acting as a pump.
Figure 3 shows the principle of an ejector acting as an outlet.
Figure 4 shows a principal scheme of a pressurising system according to the prior art when the pressure inside the tank is too high.
Figure 5 shows a principal scheme of a pressurising system according to the prior art when the relative pressure difference between the pressure inside the tank and the pressure outside the tank is static.
Figure 6 shows a principal scheme of a pressurising system according to the present invention when the relative pressure difference is below the first relative pressure difference value but above the second relative pressure difference value.
Figure 7 shows a principal scheme of a pressurising system according to the present invention when the relative pressure difference is above the first relative pressure difference value.
Figure 8 shows a principal scheme of a pressurising system according to the present invention when the relative pressure difference lies more or less statically on the first relative pressure difference value.
Figure 9 shows a principal scheme of a pressurising system according to the present invention when the relative pressure difference is below the second relative pressure difference value.
Figure 10 shows a principal scheme of a pressurising system according to the present invention when the relative pressure difference is below the second relative pressure difference value and the first regulator is failing.
Figure 11 shows a coordinate system pointing out different relative pressure difference values.
Figure 12 shows a principal scheme of a pressurising system according to the invention when it is used on an aircraft.

### DETAILED DESCRIPTION

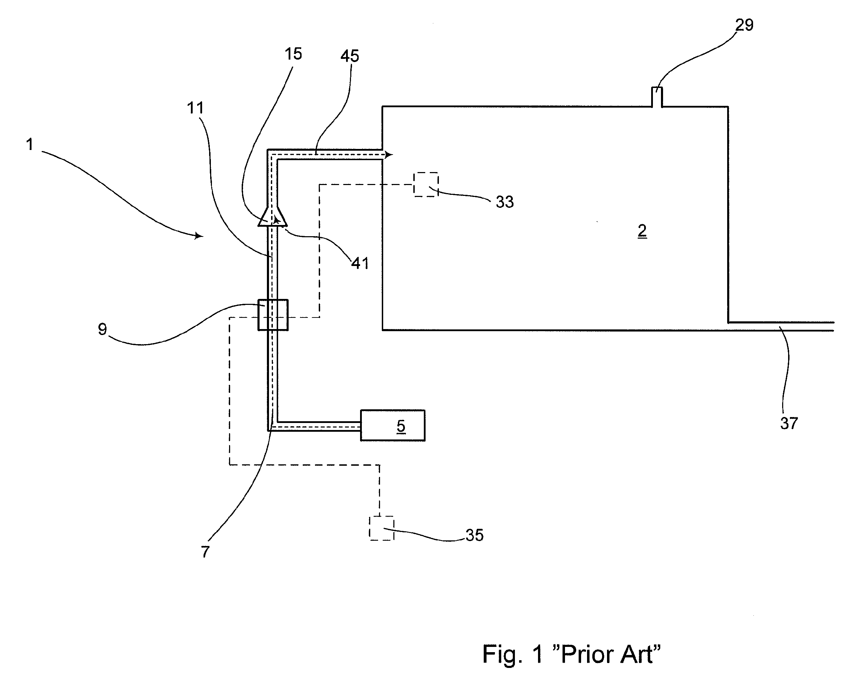

With reference to figure 1, an example of a pressurising system according to the prior art is generally depicted. The system comprises a volume 2, which in this figure is a fuel tank on an aircraft. The fuel tank 2 comprises fuel and air and has a fuel outlet 37 for furnishing fuel to the engines. The system intends to keep a moderate overpressure in the fuel tank 2 in comparison to the ambient pressure. For this purpose the system comprises a source of pressurised air 5, which pumps air into the fuel tank through a conduit system 7 when the pressure in the fuel tank is too low. It also comprises two pressure sensors, 33 and 35, which measure the pressure inside the fuel tank and the ambient pressure. The system is a half-open regulating system. The air flowing into the fuel tank 2 is regulated by means of a regulator 9 which uses the measurement results from the sensors 33 and 35 for the control of the flow 11 towards the volume. The regulator 9 tries to keep the relative pressure difference between the pressure inside the tank and the ambient pressure on a desired value. When the pressure inside the tank is too low, additional air has to be fed from the source of pressurised air 5 and when the pressure is too high air has to leak out from the tank 2.

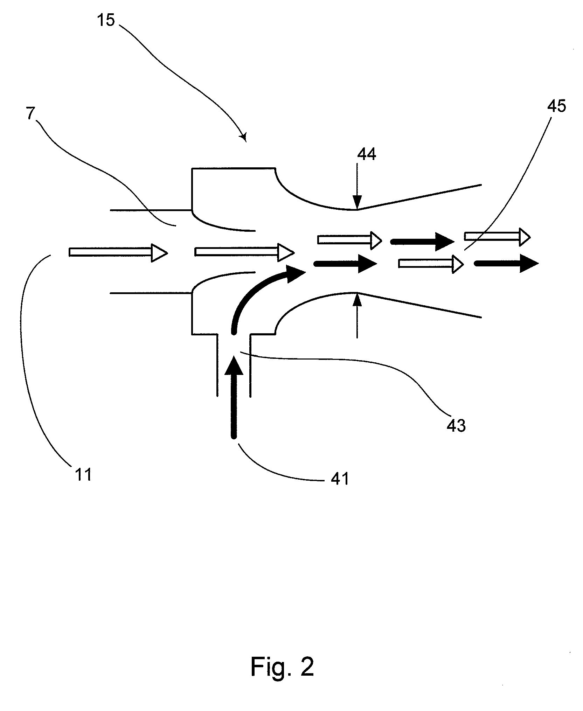

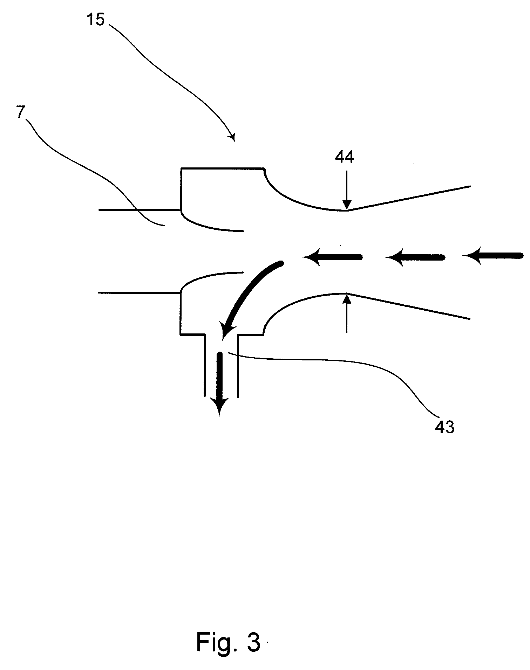

The system comprises an ejector 15 which acts as both an air inlet and an air outlet. The ejector is arranged downstream of the regulator 9. The principles of an ejector are schematically illustrated in figures 2 and 3. For clarification, the ejector of figure 2 will be discussed first and then the description of the system shown in figure 1 will be continued.

The ejector 15 shown in figure 2 comprises a main airflow 11, which flows from the left in the figure to the right. The main airflow is depicted by white arrows and corresponds to the airflow from the source of pressurised air 5 to the fuel tank 2. The ejector also comprises a throttling 43, which can act as an air inlet or an air outlet depending on the size of the main airflow 11. In figure 1, when air flows in the direction to the right in the figure, the throttling acts an air inlet. When the airflow 11 arrives in the ejector 15, an underpressure arises which sucks in ambient air 41 through the throttling 43. The ambient air 41 is depicted by black arrows. The ambient air mixes with the main air flow 11 and increases the resulting airflow 45 from the ejector, which passes the smallest intersection area, called the throat 44, in the blending chamber of the ejector. In this case the ejector 15 acts as a pump.

Back to figure 1. When the pressure inside the tank 2 is too low, the ejector 15 contributes to introduce air into the tank. A larger throat 44 implies that the resulting airflow 45 increases. Thus, it is preferable to have a large throat 44 when the ambient pressure suddenly rises, due to e.g. a diving manoeuvre, since the pressure inside the tank will be adjusted more rapidly.

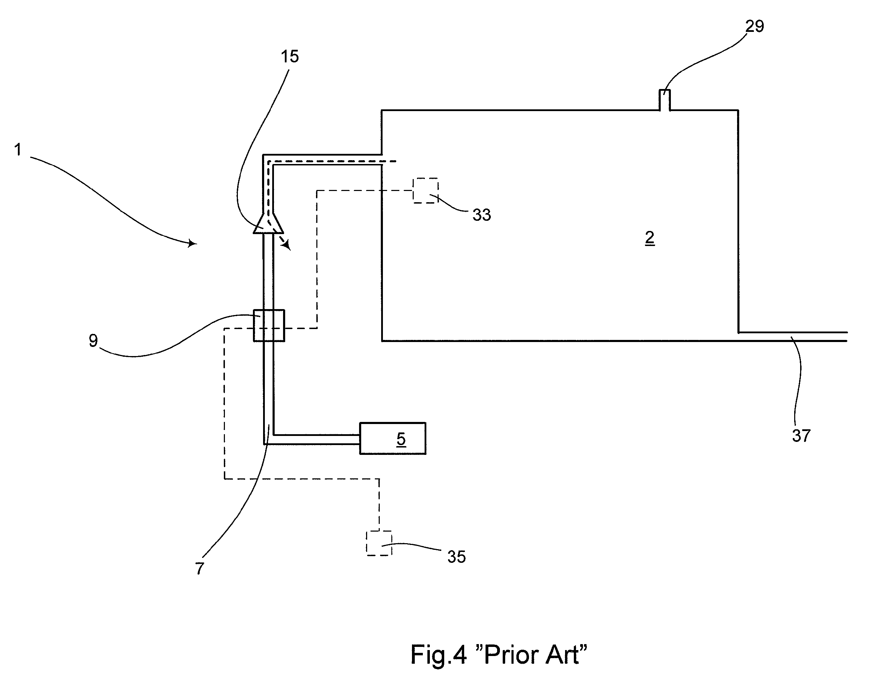

When the pressure inside the tank gets higher than the desired value, due to e.g. a climbing manoeuvre, the regulator 9 prevents air to flow towards the fuel tank 2. This case is illustrated in figure 3 and in figure 4. Figure 3 shows the same ejector 15 as the ejector 15 in figure 2, but in figure 3 there is no main airflow 11. Without a main airflow, no underpressure arises and no air is sucked in through the throttling 43 of the ejector 15. Instead the ejector throttling 43 acts as an outlet for the air inside the tank 2. Therefore when the pressure inside the tank 2 is higher than desired, air leaks out from the tank 2 through the same throttling 43 that is used to suck in air when the pressure inside the tank 2 is too low. Hence, also when the ambient pressure suddenly falls it is preferable to have a large throat 44 since the overpressure will be adjusted more rapidly. This situation is showed in figure 4.

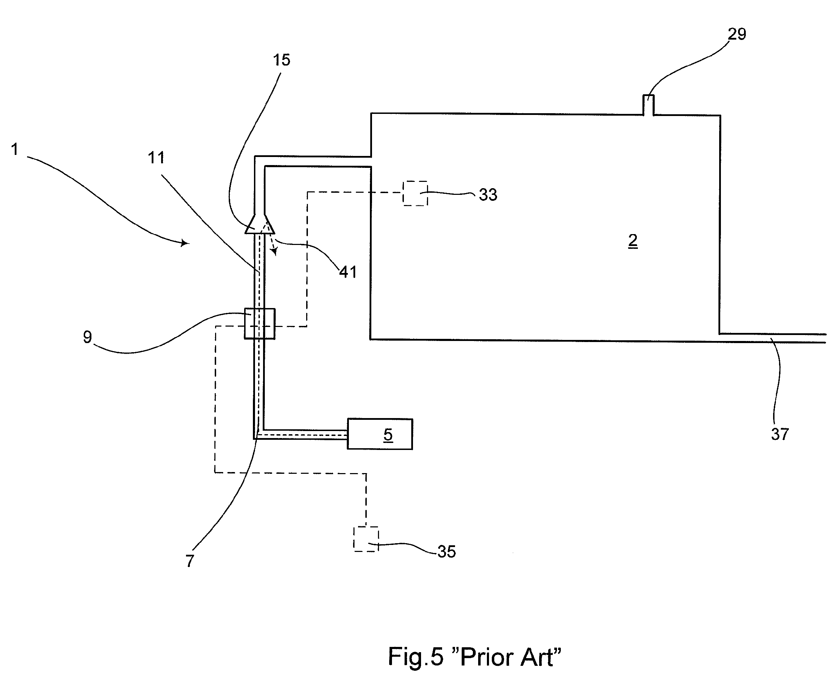

In a static condition, when the relative pressure between difference between the pressure inside the tank 2 and the ambient pressure is the desired, the regulator 9 permits a certain airflow 11 towards the tank 2. The air flowing towards the ejector 15 then bounces against the air in the blending chamber inside the ejector, keeping a balance, proportional to the size of the throat 44 in the blending chamber, between the amount of main airflow 11 and the pressure in the volume 2, and flows out through the throttling 43. Hence, the main airflow 11 that comes from the regulator 9 equals the airflow that leaks out through the throttling 43. This situation is shown in figure 5. It should therefore be apparent that in a static condition it is preferable to have a throat 44 that is as small as possible, since otherwise a lot of pressurised air is wasted, and as stated before, the amount of pressurised air on an aircraft is limited.

This system according to the prior art work acceptably when the tank volume is relatively small because then the source of pressurized air will suffice to keep the relative pressure on a desired value. However, with a larger tank volume the requirements for pressurised air will exceed the possible, especially when the fuel level decreases and the volume left over for the air increases. A smaller size of the throat 44 would save pressurised air when the ambient pressure is static, but the pressure levels in the tank cannot be adapted to the changes of ambient pressure when the aircraft flies aggressively. From the discussion above it should be clear that it would be optimal if the size of the throat could vary according to different situations so that on one hand a maximum flow can enter or leave the volume when the ambient pressure increases or decreases rapidly and on the other hand a minimum of pressurized air is used to keep the pressure during a static condition.

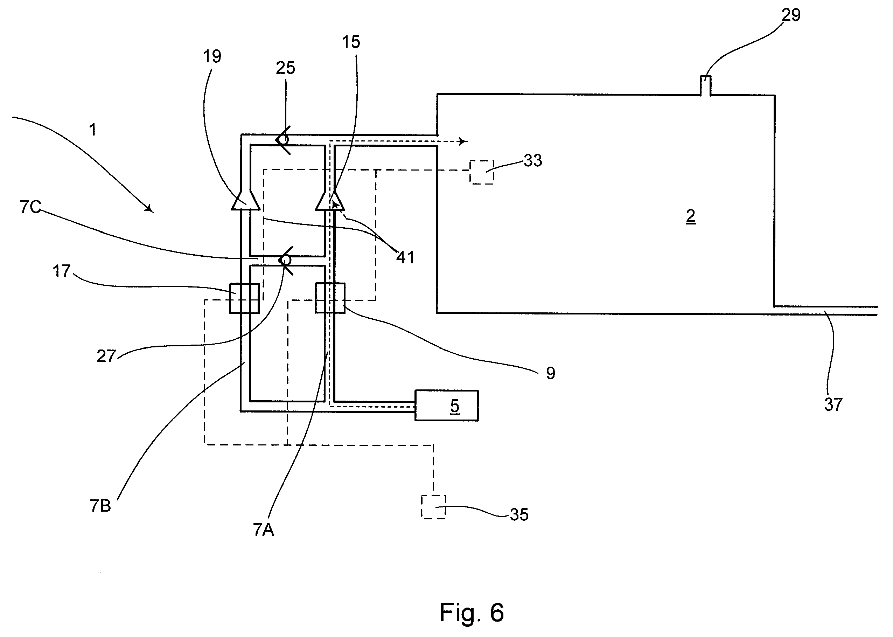

The present invention tries to overcome the drawbacks of the system according to the prior art. The system according to the invention is shown in figures 6 - 10. The figures show the same system but the airflow differs depending on different pressure situations. The system of the invention resembles the system presented in figure 1 and in figures 3 - 4, but the system of the invention has one second, additional, regulator 17 and a second, additional, ejector 19. The first regulator 9 and the first ejector 15 are arranged on a first part 7A of the conduit system and the second regulator 17 and the second ejector 19 are arranged in parallel to the first regulator 9 and the first ejector 15 on a second part 7B of the conduit system. The system of the invention is also provided with one upper check valve 25 arranged downstream of the second ejector 19 on the second part 7B of the conduit system. This upper check valve 25 is always open in a direction from the left to the right, and closed in the opposite direction. Another check valve 27 can be arranged on a third part 7C of the conduit system, which is arranged downstream of the two regulators 9 and 17 and connects the first part 7A of the conduit system with the second part 7B of the conduit system. This lower check valve 27 is closed in both directions in a normal situation. Its working principles will be discussed later.

The regulation is divided between the two regulators 9 and 17 that work with different desired values for the controlled variable, similar to the split range control principle. When the flow demand towards the volume is low, only the first regulator 9 opens up and when the flow demand is high, both regulators 9 and 17 open up. The benefit is that only the ejector 15 is used during a static condition, which minimises the amount of leaking air. When the airflow demands are high the second regulator 17, together with the second ejector, 19 open up which means that the capacity for delivering air into the volume is doubled.

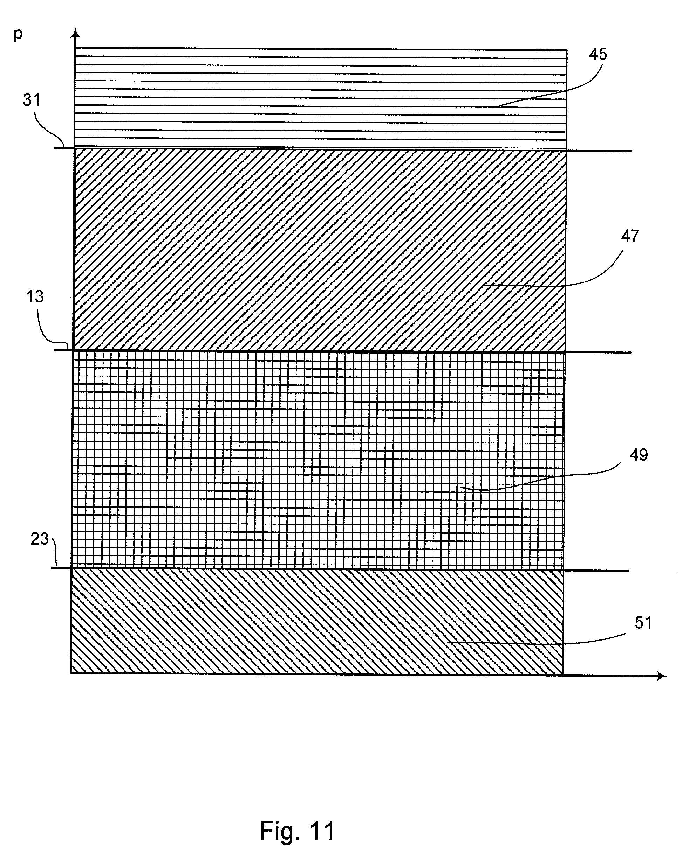

The system works differently depending on the relative pressure difference between the pressure inside the volume and the ambient pressure. Figure 11 shows a diagram with the relative pressure drawn on the vertical axis. The pressure scale is divided into four pressure intervals 45, 47 49 and 51 separated by a first 13 a second 23 a and third 31 relative pressure difference value.

The first relative pressure difference value 13 is the desired value for the first regulator 9. The second relative pressure difference value 23 is the desired value for the second regulator 17. The third relative pressure difference value 31 is the pressure value for the triggering of a security valve 29.

When the pressure difference between the inside of the volume and the ambient air is lower than the first relative pressure difference value 13 i.e. the relative pressure lies within the interval 49, the first regulator 9 tries to raise the pressure within the volume in order to obtain the desired value 13. Since the second regulator 17 has a lower desired value 23, this regulator 17 states that the relative pressure lays above its desired value 23. Therefore the regulator 17 does not permit any air to flow through the second part 7B of the conduit system, so the second part 7B of the conduit system is closed. Thus, when the relative air pressure lies within the interval 49, the system according to the invention works in the same way as the system according to the prior art. This situation is shown in figure 6.

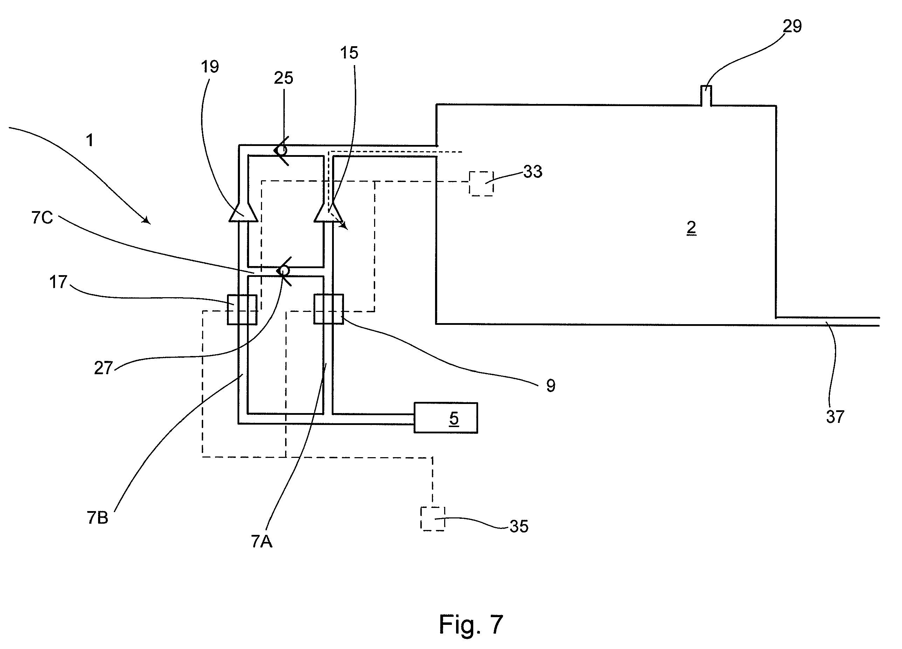

When the pressure difference between the inside of the volume and the ambient air is higher than the first relative pressure difference value 13 and lower than the third relative pressure difference value, i.e. the relative pressure lies within the interval 47, air is leaking out from the volume through the throttling 43 in the first ejector 15. This situation is shown in figure 7 and happens when the aircraft is climbing higher. The upper check valve 25 prevents air from leaking out through the second ejector 19. Thus, when the relative air pressure is within the interval 47, the system according to the invention works in the same way as the system according to the prior art.

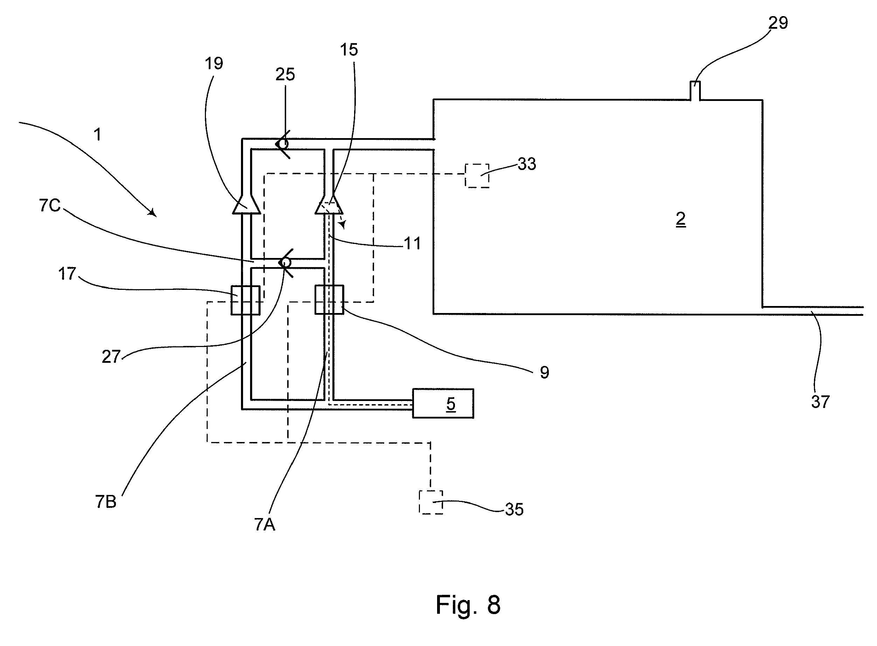

When the pressure difference is the same as the desired value for the first regulator 9 (i.e. corresponds to the first relative pressure difference value 13) the pressure condition is static. This situation is shown in figure 8. The second regulator 17 finds the relative pressure difference higher than desired, so the second regulator 17 does not permit any air to flow through the second part 7B of the conduit system. Only the first regulator 9 and the first ejector 15 work. The air flowing from the first regulator 15 towards the ejector 15 bounces against the air in the blending chamber inside the ejector, keeping a balance, proportional to the size of the throat 44 in the blending chamber, between the amount of main airflow 11 and the pressure in the volume 2, and flows out through the throttling 43 in the ejector 15. In this static situation only one ejector is used, which minimises the air leaks. The system according to the invention still works in the same way as the system according to the prior art.

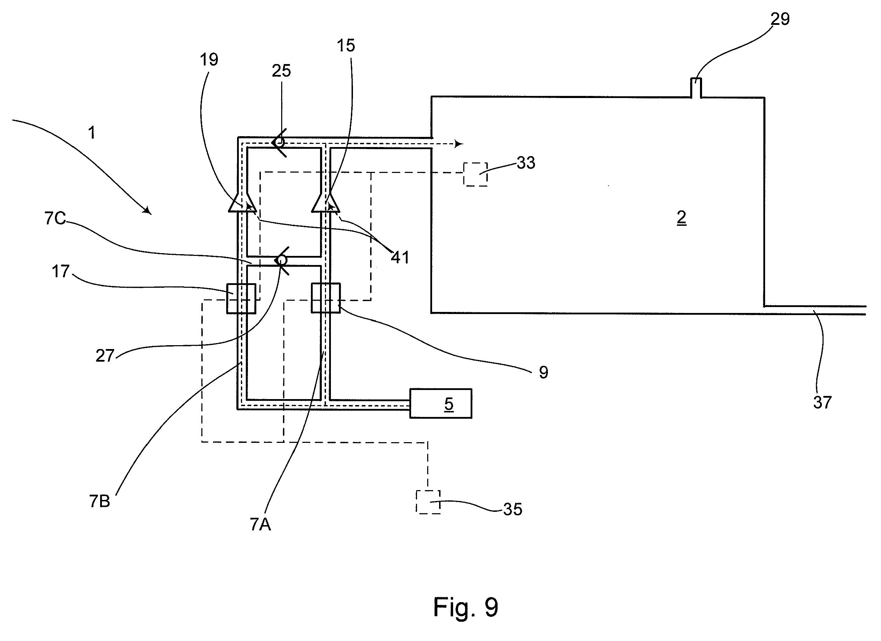

However, when the pressure difference between the inside of the volume and the ambient air is lower than the second relative pressure difference value 23 i.e. the relative pressure lies within the interval 51, both the first regulator 9 and the second regulator 17 try to raise the pressure within the volume 2. This situation is shown in figure 9 and it occurs when the ambient pressure increases fast and much like e.g. in a diving manoeuvre. In this situation it is very important to quickly raise the pressure within the volume. The first regulator 9 aims at obtaining a relative pressure corresponding to the first relative pressure difference value 13 and the second regulator 17 aims at obtaining a relative pressure corresponding to the second relative pressure difference value 23. The simultaneous use of two regulators 9 and 17 and two ejectors 15 and 19, solves the problem of efficiently increasing the pressure within the volume 2 when the demand for airflow is high. Calculations performed indicate that one side effect that occurs when the airflow is divided to pass through two ejectors is that more ambient air is sucked into the resulting air flow in comparison to if one ejector, with a throat 44 having a doubled cross section area, had been used.

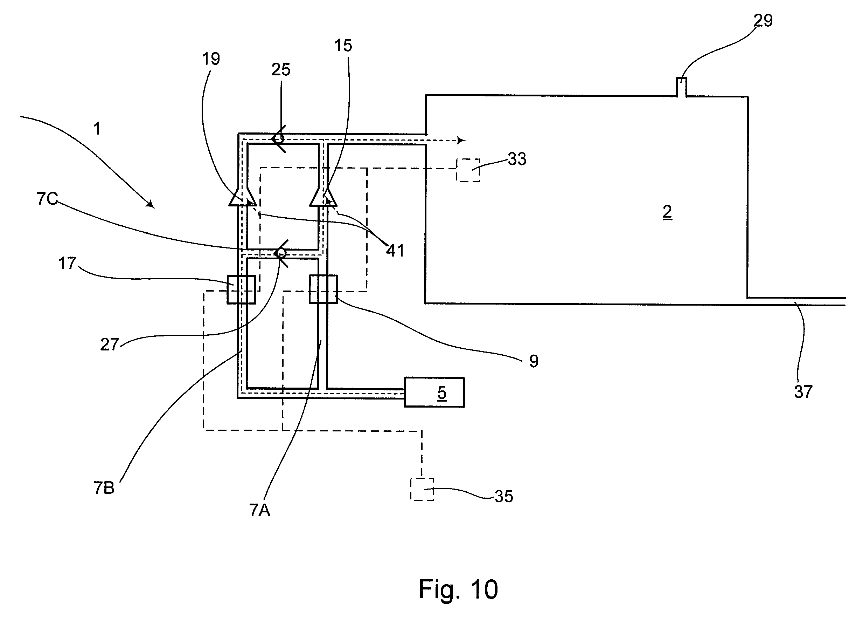

If the second regulator 17 fails, the system will still work in the same manner as the system of the state in the prior art. But, if the first regulator 9 fails and the second regulator 17 works, no main airflow 11 enters through the first ejector 15. This means that the air coming from the second regulator 17, flowing through the second ejector 19, can continue out through the throttling 43 in the first ejector 15 and that no air enters the volume 2. To prevent this situation the lower check valve 27 opens up if the first regulator 9 fails. This means that air can flow through the check valve 27 in the direction from the left to the right but not in the opposite direction. Air coming from the second regulator 17 can then take two ways. A first way through the second ejector 19 and a second way, through the lower check valve 27, into the first ejector 15 and prevent air from leaking out through the throttling 43 in the first ejector 15. This situation is showed in figure 10.

The security valve 29 opens up if the pressure inside the volume 2 reaches dangerous levels. This is the case when the relative pressure exceeds the third relative pressure level 31 and it happens if, for some reason, the regulators are open despite a high pressure in the volume 2 or might occur if the throttling 43 in the ejector 15 is clogged.

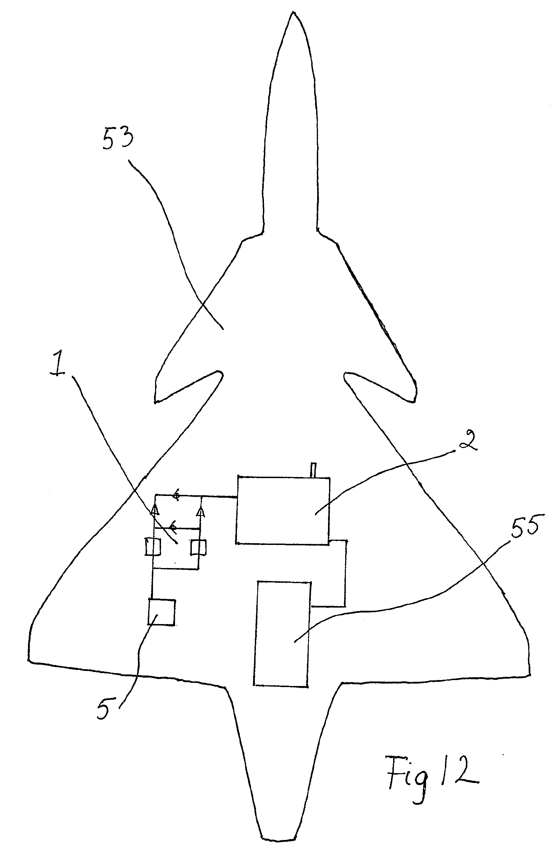

Figure 12 shows the system 1 according to the present invention when it is used on an aircraft 53. Air flows from the source of pressurized air 5, through the system 1, towards the fuel tank 2, which contains air and fuel. The fuel is used by the engine 55 of the aircraft 53.

The figures in this application show a system with two parallel regulators and ejectors, where each regulator works towards different desired pressure values. It is of course possible to have more than two parallel regulators and ejectors where each regulator works with a separate desired pressure value.

It should be obvious to the reader that the system and method are not intended to be limited to be used on fuel tanks on aircrafts. Instead, the scope of the present invention is limited by the technical features described in the claims.

## Claims

1. System (1) for pressurising a volume (2) needing to have a relative air pressure, in comparison with an ambient pressure, within a specified interval, the system (1) comprising
- a source of pressurised air (5),
- a conduit system (7) for delivering pressurized air from the source (5) into the volume (2),
- a first sensor (33) which is arranged to measure the pressure inside the volume (2),
- a second sensor (35) which is arranged to measure the ambient pressure,
- a first regulator (9) arranged on a first part (7A) of the conduit system, which regulator is arranged to regulate a first airflow, from the source of pressurised air (5) to the volume (2) through the first part (7A) of the conduit system, in order to obtain a first relative pressure difference value (13) between the pressure inside the volume (2) and the ambient pressure, in response to measurement results from the first and second sensors (33,35),
- a first ejector (15) arranged on the first part (7A) of the conduit system, downstream of the first regulator (9),
**characterised in that** the system (1) comprises
- a second regulator (17) which is arranged in parallel to the first regulator (9) and the first ejector (15) on a second part (7B) of the conduit system and which is arranged to regulate a second flow, from the source of pressurised air (5), to the volume (2) through the second part (7B) of the conduit system, in order to obtain a second relative pressure difference value (23) between the pressure inside the volume (2) and the ambient pressure, in response to measurement results from the first and second sensors (33,35),
- a second ejector (19) arranged on the second part (7B) of the conduit system, downstream of the second regulator (17),
- an upper check valve (25) arranged on the second part (7B) of the conduit system downstream of the second ejector (19), blocking airflow from the volume (2) into the second ejector (19).

2. The system (1) according to claim 1, **characterised in that** the system (1) comprises
- a lower check valve (27) arranged on a third part (7C) of the conduit system, which is arranged downstream of the two regulators (9, 17) and connects the first part (7A) of the conduit system with the second part (7B) of the conduit system.

3. The system (1) according to any of the previous claims, **characterised in that** the system (1) comprises
- at least one security valve (29), configured to relieve air from the volume (2) when the relative pressure difference between the pressure inside the volume (2) and the ambient pressure exceeds a predefined value (31).

4. The system (1) according to any of the previous claims, **characterised in that** the system (1) is configured to be used on an aircraft.

5. The system (1) according to claim 4, **characterised in that** the volume (2) is a fuel tank.

6. A method for pressurising a volume (2) that needs to have a relative air pressure, in comparison with an ambient pressure, within a specified interval, comprising the steps of:
- measuring the pressure within the volume (2),
- measuring the ambient pressure outside of the volume (2),
if the pressure difference between the pressure inside the volume and the pressure outside of the volume exceeds a first relative pressure difference value (13)
- relieving the air pressure within the volume by letting air flow out from the volume (2) through a first ejector (15),
if the pressure difference between the pressure inside the volume and the pressure outside of the volume is below the first relative pressure difference value (13)
- using a first regulator (9) arranged upstream of the first ejector (15) to regulate a first airflow from a source of pressurised air (5) through the first regulator (9) into the volume (2) in order to obtain the first relative pressure difference value (13) between the pressure inside the volume (2) and the ambient pressure,
- using the airflow through the first ejector (9) to suck in additional ambient air (41) through the first ejector (15)and add it to the first airflow into the volume (2),
the method being **characterised by** the additional steps:
if the pressure difference between the pressure inside the volume (2) and the pressure outside of the volume (2) is below a second relative pressure difference value (23), which is lower than the first relative pressure difference value
- using a second regulator (17) arranged in parallel to the first regulator (9) and the first ejector (15) to regulate a second airflow through the second regulator (17) into the volume (2) in order to obtain the second relative pressure difference value (23) between the pressure inside the volume (2) and the ambient pressure,
- using the airflow through a second ejector(19), which is arranged downstream of the second regulator (17), to suck in additional ambient air (41) through the second ejector (19) and add it to the second airflow into the volume (2).

7. A method according to claim 6, **characterised by** the additional steps:
if the first regulator (9) fails and no air passes through the first regulator (9)
- establishing a flow connection between the second regulator (17) and the first ejector (15) so that the two ejectors (15, 19) are arranged in parallel, downstream of the second regulator (17).

8. A method according to claim 6 or claim 7, **characterised by** the additional steps:
if the pressure difference between the pressure inside the volume (2) and the pressure outside of the volume (2) is above a third relative pressure difference value (31)
- relieving the air pressure within the volume (2) by letting airflow out from the volume through at least one security valve (29).

9. A method according to any of claims 6 to 8, **characterised by** the method being used to regulate a volume (2) in an aircraft.

10. A method according to claim 9, **characterised in that** the volume (2) is a fuel tank.

## Patentansprüche

1. System (1) zur Druckbeaufschlagung eines Volumens (2), das einen relativen Luftdruck im Vergleich zu einem Umgebungsdruck innerhalb eines spezifizierten Intervalls benötigt, wobei das System (1) umfasst
- eine Quelle für unter Druck stehender Luft (5),
- ein Leitungssystem (7) zur Zuführung von unter Druck stehender Luft aus der Quelle (5) in das Volumen (2)
- einen ersten Sensor (33), der ausgebildet ist, den Druck in dem Volumen (2) zu messen,
- einen zweiten Sensor (35), der ausgebildet ist, den Umgebungsdruck zu messen,
- einen ersten Regler (9), der auf einem ersten Teil (7A) des Leitungssystems angeordnet und ausgebildet ist, in Reaktion auf Messergebnisse aus dem ersten und dem zweiten Sensor (33, 35) einen ersten Luftstrom von der Quelle für unter Druck stehender Luft (5) zu dem Volumen (2) durch den ersten Teil (7A) des Leitungssystems zu steuern, um einen ersten Relativdruck-Differenzwert (13) zwischen dem Druck in dem Volumen (2) und dem Umgebungsdruck zu erhalten,
- eine erste Ausstoßeinheit (15), die mit dem ersten Teil (7A) des Leitungssystems stromabwärts in Bezug zu dem ersten Regler (9) angeordnet ist,
**dadurch gekennzeichnet, dass** das System (1) umfasst
- einen zweiten Regler (17), der parallel zu dem ersten Regler (9) und der ersten Ausstoßeinheit (15) in einem zweiten Teil (7B) des Leitungssystems angeordnet und ausgebildet ist, in Reaktion auf Messergebnisse aus dem ersten und dem zweiten Sensor (33, 35) einen zweiten Strom aus der Quelle für unter Druck stehender Luft (5) zu dem Volumen (2) durch den zweiten Teil (7B) des Leitungssystems zu steuern, um einen zweiten Relativdruck-Differenzwert (23) zwischen dem Druck in dem Volumen (2) und den Umgebungsdruck zu erhalten,
- eine zweite Ausstoßeinheit (19), die in dem zweiten Teil (7B) des Leitungssystems stromabwärts in Bezug zu dem zweiten Regler (17) angeordnet ist,
- ein oberes Rückschlagventil (25), das in dem zweiten Teil (7B) des Leitungssystems stromabwärts in Bezug zu der zweiten Ausstoßeinheit (19) angeordnet ist, das den Luftstrom aus dem Volumen (2) in die zweite Ausstoßeinheit (19) blockiert.

2. System (1) nach Anspruch 1, **dadurch gekennzeichnet, dass** das System (1) umfasst
- ein unteres Rückschlagventil (27), das in einem dritten Teil (7C) des Leitungssystems angeordnet und stromabwärts in Bezug zu den zwei Reglern (9, 17) angeordnet ist und den ersten Teil (7A) des Leitungssystems mit dem zweiten Teil (7B) des Leitungssystems verbindet.

3. System (1) nach einem der vorhergehenden Ansprüche, **dadurch gekennzeichnet, dass** das System (1) umfasst
- mindestens ein Sicherheitsventil (20), das ausgebildet ist, Luft aus dem Volumen (2) abzulassen, wenn der relative Druckunterschied zwischen dem Druck in dem Volumen (2) und dem Umgebungsdruck einen vordefinierten Wert (31) übersteigt.

4. System (1) nach einem der vorhergehenden Ansprüche, **dadurch gekennzeichnet, dass** das System (1) ausgebildet ist, in einem Luftfahrzeug verwendet zu werden.

5. System (1) nach Anspruch 4, **dadurch gekennzeichnet, dass** das Volumen (2) ein Brennstofftank ist.

6. Verfahren zur Druckbeaufschlagung eines Volumens (2), das einen relativen Luftdruck im Vergleich zu einem Umgebungsdruck innerhalb eines spezifizierten Intervalls benötigt, mit den Schritten:
- Messen des Drucks in dem Volumen (2),
- Messen des Umgebungsdrucks außerhalb des Volumens (2),
wenn die Druckdifferenz zwischen dem Druck in dem Volumen und dem Druck außerhalb des Volumens einen ersten Relativdruck-Differenzwert (13) übersteigt
- Reduzieren des Luftdrucks in dem Volumen durch Ablassen von Luft aus dem Volumen (2) durch eine erste Ausstoßeinheit (15),
wenn die Druckdifferenz zwischen dem Druck in dem Volumen und dem Druck außerhalb des Volumens unter dem ersten Relativdruck-Differenzwert (13) liegt
- Verwenden eines ersten Reglers (9), der stromaufwärts in Bezug zu der ersten Ausstoßeinheit (15) angeordnet ist, um einen ersten Luftstrom von einer Quelle für unter Druck stehender Luft (5) durch den ersten Regler (9) in das Volumen (2) so zu steuern, dass der erste Relativdruck-Differenzwert (13) zwischen dem Druck in dem Volumen (2) und dem Umgebungsdruck erhalten wird,
- Verwenden des Luftstroms durch die erste Ausstoßeinheit (9), um zusätzliche Umgebungsluft (41) durch die erste Ausstoßeinheit (15) anzusaugen und diese dem ersten Luftstrom in das Volumen (2) hinzuzufügen,
wobei das Verfahren **gekennzeichnet ist durch** die weiteren Schritte:
wenn die Druckdifferenz zwischen dem Druck in dem Volumen (2) und dem Druck außerhalb des Volumens (2) unter einem zweiten Relativdruck-Differenzwert (23) liegt, der kleiner als der erste Relativdruck-Differenzwert ist
- Verwenden eines zweiten Reglers (17), der parallel zu dem ersten Regler (9) und der ersten Ausstoßeinheit (15) angeordnet ist, um einen zweiten Luftstrom durch den zweiten Regler (17) in das Volumen (2) so zu steuern, dass der zweite Relativdruck-Differenzwert (23) zwischen dem Druck in dem Volumen (2) und dem Umgebungsdruck erhalten wird,
- Verwenden des Luftstroms **durch** eine zweite Ausstoßeinheit (19), die stromabwärts in Bezug zu dem zweiten Regler (17) angeordnet ist, um zusätzliche Umgebungsluft (41) **durch** die zweite Ausstoßeinheit (19) abzusaugen und diese dem zweiten Luftstrom in das Volumen (2) hinzuzufügen.

7. Verfahren nach Anspruch 6, **gekennzeichnet durch** die weiteren Schritte:
wenn der erste Regler (9) ausfällt und keine Luft **durch** den ersten Regler (9) strömt
- Einrichten einer Strömungsverbindung zwischen dem zweiten Regler (17) und der ersten Ausstoßeinheit (15) derart, dass die zwei Ausstoßeinheiten (15, 19) stromabwärts in Bezug zu dem zweiten Regler (17) parallel angeordnet sind.

8. Verfahren nach Anspruch 6 oder Anspruch 7, **gekennzeichnet durch** die weiteren Schritte:
wenn die Druckdifferenz zwischen dem Druck in dem Volumen (2) und dem Druck außerhalb des Volumens (2) über einem dritten Relativdruck-Differenzwert (31) liegt,
- Verringern des Luftdrucks in dem Volumen (2) **durch** Ablassen von Luft aus dem Volumen **durch** mindestens ein Sicherheitsventil (29).

9. Verfahren nach einem der Ansprüche 6 bis 8, **dadurch gekennzeichnet, dass** das Verfahren verwendet wird, um ein Volumen (2) in einem Luftfahrzeug zu steuern.

10. Verfahren nach Anspruch 9, **dadurch gekennzeichnet, dass** das Volumen (2) ein Brennstofftank ist.

## Revendications

1. Système (1) pour la pressurisation d'un volume (2) nécessitant d'avoir une pression d'air relative, par rapport à une pression ambiante, dans un intervalle spécifié, le système (1) comprenant :
- une source d'air pressurisé (5),
- un système de conduit (7) pour fournir de l'air pressurisé de la source (5) dans le volume (2),
- un premier capteur (33) qui est agencé pour mesurer la pression dans le volume (2),
- un second capteur (35) qui est agencé pour mesurer la pression ambiante,
- un premier régulateur (9) agencé sur une première partie (7A) du système de conduit, lequel régulateur est agencé pour réguler un premier flux d'air, de la source d'air pressurisé (5) au volume (2) au travers de la première partie (7A) du système de conduit, afin d'obtenir une première valeur de différence de pression relative (13) entre la pression dans le volume (2) et la pression ambiante,
en réponse à des résultats de mesure des premier et second capteurs (33, 35),
- un premier éjecteur (15) agencé sur la première partie (7A) du système de conduit, en aval du premier régulateur (9),
**caractérisé en ce que** le système (1) comprend
- un second régulateur (17) qui est agencé en parallèle au premier régulateur (9) et au premier éjecteur (15) sur une deuxième partie (7B) du système de conduit et qui est agencé pour réguler un second flux, de la source d'air pressurisé (5), au volume (2) au travers de la deuxième partie (7B) du système de conduit, afin d'obtenir une deuxième valeur de différence de pression relative (23) entre la pression dans le volume (2) et la pression ambiante,
en réponse à des résultats de mesure des premier et second capteurs (33, 35),
- un second éjecteur (19) agencé sur la deuxième partie (7B) du système de conduit, en aval du second régulateur (17),
- un clapet de retenue supérieur (25) agencé sur la deuxième partie (7B) du système de conduit en aval du second éjecteur (19), bloquant un flux d'air du volume (2) dans le second éjecteur (19).

2. Système (1) selon la revendication 1, **caractérisé en ce que** le système (1) comprend
- un clapet de retenue inférieur (27) agencé sur une troisième partie (7C) du système de conduit, qui est agencé en aval des deux régulateurs (9, 17) et relie la première partie (7A) du système de conduit à la deuxième partie (7B) du système de conduit.

3. Système (1) selon l'une quelconque des revendications précédentes,
**caractérisé en ce que** le système (1) comprend
- au moins une valve de sécurité (29) configurée pour libérer de l'air du volume (2) lorsque la différence de pression relative entre la pression dans le volume (2) et la pression ambiante excède une valeur prédéfinie (31).

4. Système (1) selon l'une quelconque des revendications précédentes,
**caractérisé en ce que** le système (1) est configuré pour être utilisé sur un aéronef.

5. Système (1) selon la revendication 4, **caractérisé en ce que** le volume (2) est un réservoir de carburant.

6. Procédé de pressurisation d'un volume (2) qui nécessite d'avoir une pression d'air relative par rapport à une pression ambiante, dans un intervalle spécifié, comprenant les étapes de :
- mesure de la pression dans le volume (2),
- mesure de la pression ambiante extérieure au volume (2),
si la différence de pression entre la pression dans le volume et la pression extérieure au volume excède une première valeur de différence de pression relative (13)
- libération de la pression d'air dans le volume en laissant un flux d'air sortir du volume (2) par un premier éjecteur (15),
si la différence de pression entre la pression dans le volume et la pression extérieure au volume est sous la première valeur de différence de pression relative (13)
- utilisation d'un premier régulateur (9) agencé en amont du premier éjecteur (15) pour réguler un premier flux d'air d'une source d'air pressurisé (5) par le premier régulateur (9) dans le volume (2) afin d'obtenir la première valeur de différence de pression relative (13) entre la pression dans le volume (2) et la pression ambiante,
- utilisation du flux d'air par le premier éjecteur (9) pour aspirer de l'air ambiant (41) supplémentaire par le premier éjecteur (15) et l'ajouter au premier flux d'air dans le volume (2),
le procédé étant **caractérisé par** les étapes supplémentaires :
si la différence de pression entre la pression dans le volume (2) et la pression extérieure au volume (2) est sous une deuxième valeur de différence de pression relative (23) qui est inférieure à la première valeur de différence de pression relative
- utilisation d'un second régulateur (17) agencé en parallèle au premier régulateur (9) et au premier éjecteur (15) pour réguler un second flux d'air par le second régulateur (17) dans le volume (2) afin d'obtenir la deuxième valeur de différence de pression relative (23) entre la pression dans le volume (2) et la pression ambiante,
- utilisation du flux d'air par un second éjecteur (19) qui est agencé en aval du second régulateur (17), pour aspirer de l'air ambiant (41) supplémentaire par le second éjecteur (19) et l'ajouter au second flux d'air dans le volume (2).

7. Procédé selon la revendication 6, **caractérisé par** les étapes supplémentaires :
si le premier régulateur (9) tombe en panne et aucun air ne passe par le premier régulateur (9)
- établissement d'une connexion de flux entre le second régulateur (17) et le premier éjecteur (15) de sorte que les deux éjecteurs (15, 19) soient agencés en parallèle, en aval du second régulateur (17).

8. Procédé selon la revendication 6 ou 7, **caractérisé par** les étapes supplémentaires :
si la différence de pression entre la pression dans le volume (2) et la pression extérieure au volume (2) est supérieure à une troisième valeur de différence de pression relative (31)
- libération de la pression d'air dans le volume (2) en laissant un flux d'air sortir du volume par au moins une valve de sécurité (29).

9. Procédé selon l'une quelconque des revendications 6 à 8, **caractérisé en ce que** le procédé est utilisé pour réguler un volume (2) dans un aéronef.

10. Procédé selon la revendication 9, **caractérisé en ce que** le volume (2) est un réservoir de carburant.
